(19) Europäisches Patentamt
European Patent Office
Office européen des brevets

(11) Veröffentlichungsnummer : **0 041 619**
**B1**

(12) # EUROPÄISCHE PATENTSCHRIFT

(45) Veröffentlichungstag der Patentschrift : **28.11.84**

(21) Anmeldenummer : **81103573.2**

(22) Anmeldetag : **11.05.81**

(51) Int. Cl.³ : **C 08 G 59/14**, C 08 G 59/06, C 08 G 59/18, C 08 G 59/40, C 08 G 59/64, C 09 D 3/00, C 09 D 3/58, C 09 D 5/40, C 25 D 13/06

(54) **Verfahren zur Herstellung von härtbaren stickstoffbasische Gruppen tragenden Polyadditionsprodukten und deren Verwendung.**

(30) Priorität : **06.06.80 DE 3021300**

(43) Veröffentlichungstag der Anmeldung : **16.12.81 Patentblatt 81/50**

(45) Bekanntmachung des Hinweises auf die Patenterteilung : **28.11.84 Patentblatt 84/48**

(84) Benannte Vertragsstaaten : **AT DE FR GB IT**

(56) Entgegenhaltungen : **DE-A- 2 942 488**

(73) Patentinhaber : **BASF Aktiengesellschaft**
**Carl-Bosch-Strasse 38**
**D-6700 Ludwigshafen (DE)**

(72) Erfinder : **Schupp, Eberhard, Dr.**
**Tilsiter Weg 4**
**D-6830 Schwetzingen (DE)**
Erfinder : **Kempter, Fritz Erdmann, Dr.**
**L2,14**
**D-6800 Mannheim (DE)**
Erfinder : **Gulbins, Erich, Dr.**
**Ladenburger Strasse 80**
**D-6900 Heidelberg-Neuenheim (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 041 619 B1

**Beschreibung**

Die vorliegende Erfindung betrifft ein Verfahren zur Herstellung von härtbaren stickstoffbasische Gruppen tragenden Polyadditionsprodukten und deren Verwendung als Bindemittel zur Herstellung von Überzügen, insbesondere für die kathodische Elektrotauchlackierung von Metallteilen.

In der DE-A 29 34 467 werden zur Elektrotauchlackierung geeignete Produkte beschrieben, welche durch Addition von Aminen an polymere Materialien mit α,β-ungesättigen Amidgruppen hergestellt werden, deren Amidgruppen aber über Methyloletherbrücken am Polymermolekül gebunden sind. Diese Produkte sind wenig hydrolysebeständig.

Stickstoffbasische Gruppen tragende Polyadditionsprodukte, welche an aromatische Ringe gebundene Gruppierungen der Formel (I) enthalten, und deren Verwendung als Bindemittel für die Kathodische Elektrotauchlackierung wurden bereits in der DE-A 29 42 488 vorgeschlagen.

Aufgabe der vorliegenden Erfindung ist es, ein neues Verfahren aufzuzeigen, das derartige stickstoffbasische Gruppen tragende Polyadditionsprodukte in einfacher Weise herzustellen erlaubt, die in ihren anwendungstechnischen Eigenschaften, insbesondere der Lösungsmittelbeständigkeit der damit erhaltenen Überzüge, weiter verbessert sind.

Gegenstand der vorliegenden Erfindung ist ein Verfahren zur Herstellung von härtbaren stickstoffbasische Gruppen tragenden Polyadditionsprodukten, das dadurch gekennzeichnet ist, daß man an

A) Mono- und/oder Polyphenole, welche Gruppierungen der allgemeinen Formel (I)

$$-CH_2-NH-\overset{O}{\overset{\|}{C}}-CR^1=CHR^2$$

tragen, wobei $R^1$ und $R^2$ untereinander gleich oder verschieden sind und für Wasserstoff oder eine Methylgruppe stehen,

B) Amine mit mindestens einer primären und/oder sekundären Aminogruppe addiert und mit

C) Epoxidverbindungen mit 1 bis 4 Epoxidgruppen pro Molekül und einem Molekulargewicht von maximal 2 500 umsetzt, wobei die Komponenten (A) und (C) in solchen Mengen eingesetzt werden, daß das Verhältnis der phenolischen Hydroxylgruppen von (A) zu Epoxidgruppen von (C) 1 : 0,5 bis 1 : 2 beträgt und das Amin (B) in einer solchen Menge eingesetzt wird, daß das resultierende Polyadditionsprodukt aus (A), (B) und (C) 0,1 bis 5 Gew.% basischen Stickstoff enthält.

Gegenstand der vorliegenden Erfindung ist außerdem die Verwendung der erfindungsgemäß hergestellten Produkte zur Herstellung von Überzügen sowie insbesondere in ihrer durch Zusatz von Säuren erhaltenen protonierten Form als Bindemittel für die kathodische Elektrotauchlackierung von Metallteilen.

In den erfindungsgemäßen Polyadditionsprodukten sind die Amidgruppen über inerte Kohlenstoff-Kohlenstoff-Bindungen mit dem Polymermolekül verknüpft. Die damit erhaltenen Überzüge zeigen ausgezeichneten Korrosionsschutz und Lösungsmittelbeständigkeit.

Beim erfindungsgemäßen Verfahren kommt es zu einer Addition des Amins (B) an die C-C-Doppelbindung der Gruppierung der allgemeinen Formel (I) der Komponente (A). Im Gegensatz dazu wird bei der in den Beispielen der DE-A 29 42 488 beschriebenen Arbeitsweise Amin mit Epoxidgruppen von Polyepoxidverbindungen zur Reaktion gebracht.

Die Addition von Aminen an α,β-ungesättigte Carbonylverbindungen ist z. B. im « Organikum », S. 492, VEB Deutscher Verlag der Wissenschaften, 1967, beschrieben.

Bezüglich der Herstellung und Aufbaukomponenten der erfindungsgemäßen Polyadditionsverbindungen ist im einzelnen folgendes auszuführen :

(A) Die α,β-olefinisch ungesättigte Amidomethylgruppen tragenden Mono- und/oder Polyphenole (A) tragen als Substituent am aromatischen Kern Gruppen der allgemeinen Formel

$$-CH_2-NH-\overset{O}{\overset{\|}{C}}-CR^1=CHR^2 \qquad (I)$$

wobei $R^1$ und $R^2$ gleiche oder verschiedene Reste bedeuten und für Wasserstoff oder eine Methylgruppe stehen. Bevorzugt sind Gruppen der Formel (I), bei denen $R^1$ Wasserstoff oder eine Methylgruppe und $R^2$ Wasserstoff bedeuten. Hergestellt werden können diese α,β-ungesättigte Amidomethylgruppen tragenden Mono- und/oder Polyphenole aus Phenolen bzw. Polyphenolen und Verbindungen der Formel

$$X-CH_2-NH-\overset{O}{\overset{\|}{C}}-CR^1=CHR^2 \qquad (II)$$

wobei X für OH, Halogen, wie z. B. Chlor oder eine Alkoxygruppe mit 1 bis 8, vorzugsweise 1 bis 4 Kohlenstoffatomen steht und $R^1$ und $R^2$ die oben angegebene Bedeutung haben.

Als Phenole sind Mono- und/oder Polyphenole, vor allem Diphenole der allgemeinen Formel

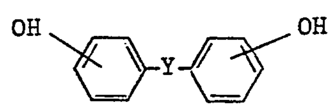

(III)

geeignet, wobei die OH-Gruppen in ortho- und/oder para-Stellung zu Y stehen, und Y für einen geradkettigen oder verzweigten zweiwertigen aliphatischen Rest mit 1 bis 3 Kohlenstoffatomen oder für $—SO_2—$, —SO—, —S—, —CO— oder —O— steht; vorzugsweise geeignet ist 2,2-Bis-p-hydroxyphenyl-propan (Bisphenol A).

Als Polyphenole können auch phenolmodifizierte Butadienöle, z. B. solche gemäß der DE-A 22 36 842 verwendet werden. Dabei ist es in vielen Fällen nicht nötig, das zur Phenolmodifizierung eingesetzte überschüssige Phenol abzudestillieren, sofern dieser Überschuß so gewählt wurde, daß er der erwünschten Menge an zur Molekulargewichtseinstellung der Bindemittel benötigtem Monophenol entspricht.

Zur Einstellung des gewünschten Molekulargewichts der erfindungsgemäßen Bindemittel ist es vorteilhaft, einen Teil der Diphenole durch Monophenole zu ersetzen. Wird ein Anteil von Monoepoxidverbindungen mitverwendet, so kann auf Monophenole verzichtet werden. Geeignete Monophenole sind solche, die mindestens in einer ortho- oder para-Stellung zur phenolischen OH-Gruppe ein H-Atom tragen, wie z. B. Phenol, Kresole, α- bzw. β-Naphthol, o- bzw. p-tert. Butylphenol und Cardanol. Cardanol ist ein Naturprodukt und besteht aus einen Gemisch langkettiger 2-Alkylenphenole mit 13 bis 17 Kohlenstoffatomen im Alkylenrest, z. B. 3-(8,11-Pentadekadienyl)-phenol. Bedingt durch diese Alkylenketten führt die Mitverwendung von Cardanol zu Bindemitteln, mit denen besonders elastische Überzüge hergestellt werden können.

Die Umsetzung der Phenole mit den Verbindungen der Formel (II) kann einem weiten Temperaturbereich, gegebenenfalls in Gegenwart von Lösungsmittel, wie Toluol, Xylol, Isobutanol, Äthylglykol und Äthylhexanol durchgeführt werden.

Bei Verwendung von starken Sären wie HCl als Katalysatoren kann bei Temperaturen um 0 °C gearbeitet werden, mit schwächer sauren Katalysatoren können Temperaturen bis etwa 160 °C nötig sein. Es ist auch möglich, Verbindungen der Formel (II) in situ herzustellen und mit dem betreffenden Phenol umzusetzen. So läßt sich zum Beispiel anstelle von Methylol(meth)acrylamid eine Mischung aus Acrylamid oder Methacrylamid und Formaldehyd oder Formaldehyd liefernden Substanzen (Paraformaldehyd) mit 2,2-Bis-p-hydroxyphenyl-propan in Gegenwart katalytischer Mengen einer Säure wie Schwefelsäure zu dem entsprechenden Diphenol mit α,β-olefinisch ungesättigter Amidomethylgruppe umsetzen.

Bei der Umsetzung von Phenolen mit Verbindungen der Formel (II) kommt des zu einer Abspaltung von HX und einer Amidomethylierung am aromatischen Kern des Phenols. Derartige Reaktionen sind als Tescherniac-Einhorn-Reaktionen bekannt. Die Umsetzung von 2,2-Bis-p-hydroxyphenyl-propan mit N-Methylolacrylamid in Eisessig mit HCl als Katalysator ist in der US-A 3 839 447 beschrieben. Die auf diese Weise herstellbaren α,β-olefinisch ungesättigte Amidomethylgruppen tragenden Diphenole können zur Herstellung der erfindungsgemäßen Polyadditionsprodukte eingesetzt werden. Durch Mitverwendung von z. B. N-Methylol-fettsäureamiden können auf einfache Weise flexibilisierend wirkende Gruppen an die Phenole addiert werden.

Es können 0,3 bis 2,5 Mol der Verbindung der Formel (II) pro Äquivalent des Phenols (= phenolische OH-Gruppe) eingesetzt werden. Im allgemeinen sind jedoch 0,5 bis 2,0 Mol pro Äquivalent Phenol ausreichend, um eine optimale Vernetzungsdichte im fertigen Lackfilm zu erzielen.

(B) Als erfindungsgemäß zu verwendende Amine kommen beliebige primäre oder sekundäre Amine, z. B. solche der allgemeinen Formel $H_2N—R^3$ bzw. $HN\!<\!{R^3 \atop R^4}$ in Frage, worin $R^3$ und $R^4$ gleiche oder verschiedene Alkylgruppen mit 1 bis 18 Kohlenstoffatomen, Äthanol-, Isopropanolreste bedeuten oder zusammen einen 5- oder 6-gliedrigen Ring bilden.

Beispiele von primären oder sekundären Aminen, die eingesetzt werden können, sind Mono- und Dialkylamine wie Methylamin, Äthylamin, Propylamin, Isopropylamin, Butylamin, Isobutylamin, s-Butylamin, Dimethylamin, Diäthylamin, Dipropylamin, Dibutylamin, Pyrrolidin, Piperidin und Morpholin. Die Amine können auch zusätzliche funktionelle Gruppen, wie eine oder zwei Hydroxylgruppen, tragen, z. B. Alkanolamine mit 2 bis 4 Kohlenstoffatomen in den Alkanolgruppen, wie Äthanolamin, Isopropanolamin, 3-Aminopropanol, Diäthanolamin und Diisopropanolamin.

Auch Amine mit mehreren basischen Stickstoffatomen können eingesetzt werden, z. B. 3-Dimethylaminopropylamin, 3-Diäthylaminopropylamin, Piperazin und N-Methylpiperazin. Im allgemeinen werden niedermolekulare Amine verwendet, doch können auch Amine mit höcherem Molekulargewicht eingesetzt werden, insbesondere dann, wenn die weichmachende Wirkung dieser Amine erwünscht ist. Es kann auch eine Mischung von niedermolekularen und höhermolekularen Aminen eingesetzt werden.

Bevorzugt sind Alkanolamine, insbesondere Diethanolamin sowie N-Hydroxyethylpiperazin.

(C) Als Polyepoxidverbindungen können alle üblichen Epoxidharze eingesetzt werden, z. B. die Diglycidyläther von Bisphenol A, welche z. B. aus Bisphenol A und Epichlorhydrin in Gegenwart von Alkali hergestellt werden können. Auch die Polyglycidyläther von mehrwertigen Alkoholen mit einem Molekulargewicht des Polyglycidyläthers von 180-2 500, z. B. die von Pentaerythrit, Glycerin, Trimethylolpropan, Äthylenglykol, Diäthylenglykol, Polyoxyäthylenglykolen und Polyoxypropylenglykolen mit Molekulargewichten von 200 bis 2 000 und anderer mehrwertiger, vorzugsweise zwei- bis vierwertiger Alkohole können verwendet werden.

Andere geeignete Polyepoxidverbindendungen sind stickstoffhaltige Diepoxide, wie sie in der US-A 3 365 471 beschrieben sind, Epoxidharze aus 1,1-Methylen-bis-(5-substituiertem Hydantoin) nach der US-A-3 391 097, Diepoxide aus Bisimiden nach US-A-3 450 711, epoxydierte Aminomethyl-diphenyloxide nach US-A-3 312 664, heterocyclische N,N'-Diglycidylverbindungen nach US-A-3 503 979, Aminoepoxyphosphate nach GB-A-1 172 916 oder 1,3,5-Triglycidylisocyanurate und andere in der Technik gut bekannte Materialien, die Epoxidgruppen enthalten, wie z. B. Dicyclopentadiendioxid und Limonendioxid sowie epoxidierte Butadienöle.

Auch Epoxidgruppen tragende Polyacrylate sind als Polyepoxidverbindungen zur Herstellung der erfindungsgemäßen Polyadditionsprodukte geeignet. Diese Harze lassen sich z. B. durch Mischpolymerisation eines ungesättigten epoxidhaltigen Monomeren, wie z. B. Glycidylacrylat oder -methacrylat, mit mindestens einem anderen ungesättigten Monomeren herstellen.

Es können auch anteilmäßig Monoepoxidverbindungen mitverwendet werden, sofern dies, z. B. zur Einstellung des Molekulargewichts der Bindemittel erwünscht ist. Glycidylester von langkettigen Carbonsäuren, wie z. B. ®cardura E der Firma Shell oder Glycidyläther von langkettigen Alkoholen können verwendet werden, falls das Bindemittel weichgemacht werden soll, was zu elastischeren Überzügen führt.

Erfindungsgemäß werden die Komponenten (A) und (C) in solchen Mengen eingesetzt, daß das Verhältnis der phenolischen Hydroxylgruppen der Kompente (A) zu Epoxidgruppen der Komponente (C) 1 : 0,5 bis 1 : 2, vorzugsweise 1 : 0,8 bis 1 : 1,6 beträgt.

Die Anlagerung der Amine (B) an die Doppelbindungen der Mono- und/oder Polyphenole (A), welche Gruppierungen der Formel (I) tragen, kann durch einfaches Vermischen der Komponenten (A) und (B) erfolgen, im allgemeinen ist jedoch eine Erwärmung auf 50 bis 110 °C zweckmäßig, um die Additionsgeschwindigkeit zu beschleunigen. Die Menge an eingesetztem Amin bestimmt den Gehalt an basischem Stickstoff im fertigen Bindemittel. Sie wird im allgemeinen so gewählt, daß das Bindemittel etwa 0,1 bis 5, vorzugsweise 0,75 % bis 3 Gew.% basischen Stickstoff enthält. Die Reaktion wird zweckmäßigerweise in Lösungsmitteln, z. B. in Alkoholen wie Isopropanol, n-Butanol oder iso-Butanol, in Kohlenwasserstoffen wie Benzol oder Toluol, oder in einem anderen technischen Lösungsmittel oder Lösungsmittelgemisch, welches die Komponenten löst, durchgeführt. Die anschließende Reaktion mit der Komponente (C) wird zweckmäßigerweise bei Temperaturen von 50 bis 110 °C durchgeführt. Das Fortschreiten der Reaktion kann durch Bestimmung der noch vorhandenen Epoxid- oder Phenolgruppen oder durch Messung der Viskosität erfolgen.

Eine andere Möglichkeit, das erfindungsgemäße Herstellverfahren durchzuführen, besteht in der gleichzeitigen Zugabe von Amin (B) und Epoxidverbindung (C) zu den Mono- und/oder Polyphenolen, die Gruppierungen der Formel (I) tragen (A). Auch in diesem Fall kommt es in einer raschen und exothermen Reaktion zur Addition der Amine an die ungesättigten Gruppen der Phenole, während die nachfolgende Reaktion der phenolischen OH-Gruppen mit den Epoxidgruppen viel langsamer abläuft. Bei dieser gleichzeitigen Zugabeweise kann es in einem gewissen Umfang auch zu einer Addition von Amin an Epoxidgruppen kommen, was die Qualität und Verwendbarkeit des hergestellten Polyadditionsprodukts im allgemeinen nicht beeinträchtigt.

Die erfindungsgemäß hergestellten Polyadditionsprodukte können mit üblichen Lacklösungsmitteln, wie Alkoholen mit einer Kettenlänge von 1 bis 16 Kohlenstoffatomen, z. B. Methanol, Isopropanol, Dekanol, n- und iso-Butanol, Alkylaromaten, z. B. Toluol und Cycloaliphaten sowie mit (oligomeren) Glykolen und Glykoläthern oder wäßrigen organischen Lösungsmittelgemischen verdünnt, gegebenenfalls zusammen mit Pigmenten, Füllstoffen und bei der Verarbeitung von Lacken üblichen Hilfsmitteln unter Anwendung konventioneller Lackiermethoden, wie Spritzen, Tauchen, Fluten, auf das zu überziehende bzw. zu lackierende Substrat, wie z. B. auf Holz, Metall, Glas oder Keramik, aufgetragen, getrocknet und bei Temperaturen von über 170 °C gehärtet werden. Die damit erhaltenen Überzüge zeichnen sich beispielsweise durch hohe Härte und Lösungsmittelbeständigkeit aus.

Die erfindungsgemäßen Polyadditionsprodukte lassen sich vorteilhaft auch durch Bestrahlen mit IR-, UV- und Elektronenstrahlen aushärten, wobei gegebenenfalls reaktive Verdünner, wie Mono- und Diacrylate, sowie bei UV-Härtung zweckmäßigerweise übliche UV-Initiatoren, wie Benzoinäther oder Benzilketale mitverwendet werden.

Bevorzugt werden die erfindungsgemäßen Lackbindemittel jedoch mit Säuren, wie z. B. Phosphorsäure und ihren Derivaten, vorzugsweise mit wasserlöslichen Carbonsäuren, wie z. B. Essigsäure, Ameisensäure, Milchsäure, protoniert angewandt. Das protonierte Lackbindemittel ist wasserverdünnbar und kann unter Anwendung der oben angeführten konventionellen Lackiermethoden verarbeitet werden, wobei ebenfalls Überzüge mit sehr wertvollen Eigenschaften erhalten werden.

Die bevorzugte Verwendung der erfindungsgemäßen protonierten Polyadditionsprodukte ist ihre Verwendung als Lackbindemittel für die kathodische Elektrotauchlackierung elektrisch leitender Flächen, z. B. von Metallteilen oder Blechen aus Messing, Kupfer, Aluminium, Eisen und Stahl, die gegebenenfalls chemisch vorbehandelt, z. B. phosphatiert, sind.

Die wäßrigen Lösungen oder Dispersionen der zumindest teilweise als Salz einer wasserlöslichen Carbonsäure vorliegenden erfindungsgemäßen Polyadditionsprodukte können auch im Gemisch mit diesen durch Kataphorese elektrochemisch abscheidbare Hilfstoffe enthalten, wie Pigmente, z. B. Ruß, Talkum, Titandioxid, Kaolin, basisches Bleichromat und Eisenoxidpigmente, lösliche Farbstoffe, Lösungsmittel, Verlaufsverbesserer, Stabilisatoren, Härtungskatalysatoren, Antischaummitel sowie andere Hilfsund Zusatzstoffe.

Zur kathodischen Elektrotauchlackierung wird im allgemeinen durch Verdünnen mit entionisiertem Wasser ein Feststoffgehalt des Elektrotauchbades von 5 bis 30 Gew.-% eingestellt. Die Abscheidung erfolgt im allgemeinen bei Temperaturen von 15 bis 40 °C während einer Zeit von 1 bis 2 Minuten und bei pH-Bad-Werten von 4,0 bis 8,5, vorzugsweise pH 5,0 bis 7,5 ; bei Abscheidungsspannungen zwischen 50 und 500 Volt. Nach dem Abspülen des auf dem elektrisch leitenden Körper kathodisch abgeschiedenen Films wird dieser bei 140° bis 200 °C 10 bis 30 Minuten, vorzugsweise bei 160° bis 180 °C ca. 20 Minuten gehärtet.

Die folgenden Beispiele sollen die Erfindung noch näher erläutern, ohne sie zu beschränken. Die in den Beispielen genannten Teile und Prozente sind Gewichtsteile und Gewichtsprozente.

## Herstellungsbeispiele

### Herstellung der Komponente A

#### Komponente $A_1$

Zu 228 Teilen Bisphenol A, 84 Teilen Phenol, 213 Teilen Acrylamid und 99 Teilen Paraformaldehyd werden 0,1 Teile Kupfer-Pulver gegeben und der Ansatz langsam erwärmt. Bei 80 °C hat sich die Masse weitgehend verflüssigt. Es wird auf 115 °C erhitzt und 10 Minuten bei dieser Temperatur gehalten, wobei der Ansatz völlig klar wird. Es wird auf 55 bis 60 °C abgekühlt und 3 Teile Bortrifluoriddiethyletherat zugegeben. Die Temperatur wird unter anfänglichem Kühlen bei 60 °C gehalten und nach 1 Stunde nochmals 3 Teile Etherat zugegeben. Der Ansatz wird weitere 3 Stunden bei 60 °C gehalten und danach mit 250 Teilen Isobutanol verdünnt. Die Temperatur wird bis zum Siedepunkt erhöht und innerhalb von 90 Minuten ca. 50 Teile Wasser ausgekreist. Das Produkt hat einen Festgehalt von 70 %.

#### Komponente $A_2$

Zu 152 Teilen Bisphenol A, 62,6 Teilen Phenol und 202 Teilen Methylolacrylamid werden 0,1 Teile Kupfer-Pulver gegeben und der Ansatz auf 80 °C erhitzt. Die gebildete klare Lösung wird auf 60 °C abgekühlt und mit 2 Teilen Bortrifluoriddiethyletherat versetzt. Nach 1 Stunde Rühren bei 60 °C werden weitere 2 Teile Etherat zugegeben. Nach 3 Stunden bei 60 °C werden 167 Teile Isobutanol zugegeben und innerhalb von 90 Minuten ca. 30 Teile Wasser ausgekreist. Das Produkt hat einen Festgehalt von 69 %.

#### Komponente $A_3$

Zu 182,4 Teilen Bisphenol A, 37,6 Teilen Phenol und 142 Teilen Acrylamid werden 76,6 Teile Paraformaldehyd, 90 Teile Ölsäureamid und 0,1 Teile Kupfer-Pulver gegeben. Es wird kurz auf 120 °C erhitzt, bis eine klare Lösung entstanden ist, auf 50 °C gekühlt und 2 Teile Bortrifluoriddiethyletherat zugegeben. Es wird unter anfänglichem Kühlen 1 Stunde bei 50 bis 55 °C gehalten, nochmals 2 Teile Etherat zugegeben und 1 Stunde bei 50 bis 55 °C und anschließend 2 Stunden bei 60 °C gehalten. Danach wird mit 209 Teilen Isobutanol verdünnt, auf Rückflußtemperatur erhitzt und innerhalb von 90 Minuten 35 Teile Wasser ausgekreist.

#### Komponente $A_4$

Es wird ähnlich wie bei Komponente $A_3$ verfahren. Dabei wird das Ölsäureamid weggelassen und nur 66 Teile Paraformaldehyd verwendet. Außerdem wird mit nur 168 Teilen Isobutanol verdünnt.

#### Komponente $A_5$

Zu 94 Teilen Phenol und 202 Teilen Methylolacrylamid werden 6,3 Teile Paraformaldehyd und 0,1 Teile Kupfer-Pulver gegeben. Der Ansatz wird bei 100 °C gelöst, auf 55 °C gekühlt und 1 Teil Bortrifluoriddiethyletherat zugesetzt. Nach 1 Stunde bei 55 bis 60 °C wird nochmals die gleiche Katalysatormenge zugegeben und 3 Stunden bei 60 °C gehalten. Anschließend wird auf 115 °C erhitzt und 30 Minuten bei dieser Temperatur gehalten, wobei etwa 20 Teile Wasser abdestillieren. Der Ansatz wurde auf 80 °C gekühlt und mit 120 Teilen Isobutanol verdünnt.

### Beispiel 1

138 Teile der Komponente $A_1$ werden auf 70 °C erwärmt, mit 19,7 Teilen Diethanolamin und 8,1 Teilen Hydroxyethylpiperazin versetzt und 1 Stunde bei 75 bis 80 °C gehalten. Es werden 54 Teile Isopropanol und 99 Teile eines Diglycidylethers aus Bisphenol A und Epichlorhydrin mit einem Epoxidäquivalentgewicht von 189 zugegeben und anschließend so lange bei 70 °C gerührt, bis die Viskosität, gemessen bei 75 °C mit einem Platten-Konus-Viskosimeter, 2 440 mPa.s beträgt, wozu etwa 7 Stunden benötigt werden. Danach werden 9 Teile Essigsäure und 50 Teile Wasser zugegeben. Durch

Verdünnen mit entionisiertem Wasser wird daraus ein Elektrotauchlack mit 10 % Festgehalt und einem pH-Wert von 6,1 hergestellt.

Beispiel 2

Es wird wie in Beispiel 1 verfahren, statt 138 Teilen Komponente $A_1$ werden jedoch 138 Teile der Komponente $A_2$ verwendet.

Beispiel 3

175 Teile der Komponente $A_3$ und 26,25 Teile Diethanolamin werden 1 Stunde auf 75 bis 80 °C erwärmt. Anschließend werden 72 Teile Isopropanol und 142 Teile eines Diglycidylethers aus Bisphenol A und Epichlorhydrin mit einem Epoxidäquivalentgewicht von 189 zugegeben und anschließend so lange bei 85 °C gerührt, bis die Viskosität, gemessen bei 75 °C mit einem Platten-Konus-Viskosimeter, 2 440 mPa.s beträgt, wozu etwa 10 Stunden benötigt werde. Danach werden 20 Teile eines Polybutadienöls mit einem Molekulargewicht von 3 000 und 80 % 1,4-cis-, 19 % trans- und 1 % 1,2-vinyl-Konfiguration, 9 Teile Essigsäure und 10 Teile Wasser zugesetzt. Durch Verdünnen mit deionisiertem Wasser wird ein Elektrotauchbad mit einem Festgehalt von 11 % hergestellt.

Beispiel 4

140 Teile des Komponente $A_4$ und 31,5 Teile Diethanolamin werden 1 Stunde bei 75 bis 80 °C gerührt. Danach werden 142 Teile des in Beispiel 2 verwendeten Diglycidylethers aus Bisphenol A und Epichlorhydrin, 14 Teile eines Polyglycidylethers aus Pentaerythrit und Epichlorhydrin mit einem Chlorgehalt von 12 % und einem Epoxidäquivalentgewicht von 160 und 80 Teile Isopropanol zugegeben und anschließend so lange bei 85 °C gerührt, bis die Viskosität, gemessen bei 75 °C mit einem Platten-Konus-Viskosimeter, 2 480 mPa.s beträgt, wozu etwa 8 Stunden benötigt werden. Danach werden 20 Teile des in Beispiel 3 verwendeten Polybutadienöls, 9 Teile Essigsäure und 50 Teile Wasser zugegeben. Durch Verdünnen mit entionisiertem Wasser wird ein Elektrotauchbad mit einem Festgehalt von 11 % hergestellt.

Resultate der Bindemittelprüfung

Den Elektrotauchbädern wurde jeweils 1 % Ethylhexanol zugesetzt und 24 Stunden bei 25 °C gealtert. Bei den Beispielen 1, 3 und 4 wurden außerdem 50 ppm Blei als Bleiacetat zugesetzt. Anschließend wurden sowohl zinkphosphatierte wie auch unbehandelte Stahlbleche kataphoretisch beschichtet und 20 Minuten bei 180 °C eingebrannt. Anschließend wurden die Bleche geritzt und dem ASTM-Salzsprühtest (DIN SS 50021) unterworfen.

| | zinkphosphatiert | | | unbehandelter Stahl | | |
|---|---|---|---|---|---|---|
| | Abscheide-spannung | Schicht-stärke | ASTM 480 h | Abscheide-spannung | Schicht-stärke | ASTM 480 h |
| Beisp. 1 | 130 V | 16 µm | 1,5 mm | 80 V | 17 µm | 1 mm |
| Beisp. 2 | 140 V | 16 µm | 2 mm | 140 V | 17 µm | 2 mm |
| Beisp. 3 | 130 V | 15 µm | 1-1,5 mm | 130 V | 16 µm | 1-3 mm |
| Beisp. 4 | 170 V | 16 µm | 1-2 mm | 90 V | 15 µm | 2-3 mm |

**Ansprüche**

1. Verfahren zur Herstellung von härtbaren stickstoffbasische Gruppen tragenden Polyadditionsprodukten, dadurch gekennzeichnet, daß man an

A) Mono- und/oder Polyphenole, welche Gruppierungen der allgemeinen Formel (I)

$$-CH_2-NH-\overset{O}{\overset{\|}{C}}-CR^1=CHR^2 \quad (I)$$

tragen, wobei $R^1$ und $R^2$ untereinander gleich oder verschieden sind und für Wasserstoff oder eine Methylgruppe stehen,

B) Amine mit mindestens einer primären und/oder Sekundären Aminogruppe addiert und mit

C) Epoxidverbindungen mit 1 bis 4 Epoxidgruppen pro Molekül und einem Molekulargewicht von maximal 2 500 umsetzt, wobei die Komponenten (A) und (C) in solchen Mengen eingesetzt werden, daß das Verhältnis der phenolischen Hydroxylgruppen von (A) zu Epoxidgruppen von (C) 1 : 0,5 bis 1 : 2 beträgt und das Amin (B) in einer solchen Menge eingesetzt wird, daß das resultierende Polyadditionsprodukt aus (A), (B) und (C) 0,1 bis 5 Gew.% basischen Stickstoff enthält.

2. Verfahren gemäß Anspruch 1, dadurch gekennzeichnet, daß als Mono- und/oder Polyphenole (A) mit Gruppierungen der allgemeinen Formel (I) ein Umsetzungsprodukt aus Mono- und/oder Polyphenol und einer Verbindung der allgemeinen Formel (II)

$$X-CH_2-NH-\overset{O}{\overset{\|}{C}}-CR^1=CHR^2 \qquad (II)$$

verwendet wird, wobei X für OH, Halogen oder eine Alkoxygruppe mit 1 bis 8 Kohlenstoffatomen steht, $R^1$ und $R^2$ untereinander gleich oder verschieden sind und für Wasserstoff oder eine Methylgruppe stehen.

3. Verfahren gemäß Anspruch 2, dadurch gekennzeichnet, daß als Verbindung der allgemeinen Formel (II) N-Methylol(meth)acrylamid verwendet wird.

4. Verfahren gemäß Anspruch 3, dadurch gekennzeichnet, daß anstatt N-Methylol(meth)acrylamid ein Gemisch aus Acrylamid oder Methacrylamid und Formaldehyd oder Formaldehyd liefernden Substanzen in Gegenwart eines sauren Katalysators verwendet wird.

5. Verfahren gemäß einem der Ansprüche 2 bis 4, dadurch gekennzeichnet, daß als Polyphenol 2,2-Bis-p-hydroxyphenyl-propan (= Bisphenol A) verwendet wird.

6. Verfahren gemäß einem der Ansprüche 1 bis 5, dadurch gekennzeichnet, daß als Komponente (B) ein sekundäres Amin, welches eine oder zwei Hydroxyalkylgruppen enthält, verwendet wird.

7. Verfahren gemäß einem der Ansprüche 1 bis 6, dadurch gekennzeichnet, daß als Komponente (C) Diglycidylether des Bisphenol A, erhalten aus Bisphenol A und Epichlorhydrin, verwendet werden.

8. Verwendung der Verfahrensprodukte nach einem der vorhergehenden Ansprüche, gegebenenfalls nach Protonierung mit Säuren, als Bindemittel zur Herstellung von Überzügen.

9. Verwendung der Verfahrensprodukte nach einem der Ansprüche 1 bis 7 nach Protonierung mit Säure als Bindemittel für die kathodische Elektrotauchlackierung von Metallteilen.

**Claims**

1. A process for the preparation of a curable polyadduct containing basic nitrogen groups, wherein

A) monophenols or polyphenols, or mixtures of monophenols and polyphenols, which contain groups of the general formula (I)

$$-CH_2-NH-\overset{O}{\overset{\|}{C}}-CR^1=CHR^2 \qquad (I)$$

where $R^1$ and $R^2$ are identical or different and each is hydrogen or methyl, are reacted with

B) amines having one or more primary or secondary amino groups or one more primary and one or more secondary amino groups, and the adduct formed is reacted with

C) epoxide compounds having from 1 to 4 epoxide groups per molecule and having a molecular weight of at most 2,500, the components (A) and (C) being employed in such amounts that the ratio of phenolic hydroxyl groups of (A) to epoxide groups of (C) is from 1 : 0.5 to 1 : 2, and the amine (B) being employed in such an amount that the resulting polyadduct of (A), (B) and (C) contains from 0.1 to 5 % by weight of basic nitrogen.

2. A process as claimed in claim 1, wherein component (A), having groups of the general formula (I), is reaction product of monophenols or polyphenols, or of a mixture of monophenols and polyphenols, and a compound of the general formula (II)

$$X-CH_2-NH-\overset{O}{\overset{\|}{C}}-CR^1=CHR^2 \qquad (II)$$

where X is OH, halogen or alkoxy of 1 to 8 carbon atoms and $R^1$ and $R^2$ are identical or different and each is hydrogen or methyl.

3. A process as claimed in claim 2, wherein N-methylolacrylamide or N-methylolmethacrylamide is used as the compound of the general formula (II).

4. A process as claimed in claim 3, wherein, in place of N-methylolacrylamide or N-methylolmethacrylamide, a mixture of acrylamide or methacrylamide and formaldehyde or a formaldehyde donor is used in the presence of an acidic catalyst.

5. A process as claimed in any of claims 2 to 4, wherein 2,2-bis-p-hydroxyphenyl-propane (= bisphenol A) is used as the polyphenol.

6. A process as claimed in any of claims 1 to 5, wherein a secondary amine containing one or two hydroxyalkyl groups is used as component (B).

7. A process as claimed in any of claims 1 to 6, wherein a diglycidyl ether of bisphenol A, obtained from bis-phenol A and epichlorohydrin, is used as component (C).

8. The use of the products prepared by a process as claimed in any of the preceding claims, after optional protonation with an acid, as binders for the production of coatings.

9. The use of the products prepared by a process as claimed in any of claims 1 to 7, after protonation with an acid, as binders for the cathodic electrocoating of metal articles.

**Revendications**

1. Procédé de préparation de produits de polyaddition portant des groupes à azote basique durcissables, caractérisé par le fait qu'on ajoute à

A) des mono- et/ou polyphénols, qui portent des groupements de formule générale (I)

$$-CH_2-NH-\overset{\overset{\displaystyle O}{\|}}{C}-CR^1=CHR^2 \qquad (I)$$

$R^1$ et $R^2$ étant identiques ou différents et représentant l'hydrogène ou un groupe méthyle

B) des amines ayant au moins un groupe amino primaire et/ou secondaire et qu'on fait réagir avec

C) des composés époxy ayant 1 à 4 groupes époxy par molécule et un poids moléculaire maximal de 2 500, les composants (A) et (C) étant introduits en quantités telles que le rapport des groupes hydroxyle phénoliques de (A) aux groupes époxy de (C) soit de 1/0,5 à 1/2 et l'amine (B) est introduite en qualité telle que le produit de polyaddition résultant, à partir de (A), (B) et (C), contient 0,1 à 5 % en poids d'azote basique.

2. Procédé selon la revendication 1, caractérisé par le fait qu'on utilise, comme mono- et/ou polyphénols (A) à groupements de formule générale (I), un produit de réaction de mono- et/ou polyphénol et d'un composé de formule générale (II)

$$X-CH_2-NH-\overset{\overset{\displaystyle O}{\|}}{C}-CR^1=CHR^2 \qquad (II)$$

X représentant OH, un halogène ou un groupe alcoxy de 1 à 8 atomes de carbone, $R^1$ et $R^2$ étant identiques ou différents et représentant l'hydrogène ou un groupe méthyle.

3. Procédé selon la revendication 2, caractérisé par le fait que l'on utilise, comme composé de formule générale (II), du N-méthylol(meth)acrylamide.

4. Procédé selon la revendication 3, caractérisé par le fait qu'au lieu de N-méthylol(meth)acrylamide, on utilise un mélange d'acrylamide ou méthacrylamide et de formaldéhyde ou de substances générant du formaldéhyde, en présence d'un catalyseur acide.

5. Procédé selon l'une des revendications 2 à 4, caractérisé par le fait que l'on utilise, comme polyphénol, du 2,2-bis-p-hydroxyphényl-propane (= bisphénol A).

6. Procédé selon l'une des revendications 1 à 5, caractérisé par le fait que l'on utilise, comme composant (B), une amine secondaire qui contient un ou deux groupes hydroxyalkyle.

7. Procédé selon l'une des revendications 1 à 6, caractérisé par le fait que l'on utilise, comme composant (C), de l'éther diglycidylique du bisphénol A, obtenu à partir de bisphénol A et d'épichlorhydrine.

8. Utilisation des produits obtenus par le procédé selon l'une des revendications précédentes, éventuellement après protonation avec des acides, comme liants pour la préparation de revêtements.

9. Utilisation des produits obtenus par le procédé selon l'une des revendications 1 à 7, après protonation avec des acides, comme liants pour la peinture par électroimmersion cathodique.